# EUROPEAN PATENT SPECIFICATION

(11) **EP 0 508 689 B1**
(45) Date of publication and mention of the grant of the patent: **26.01.2000**
(21) Application number: 92302936.7
(22) Date of filing: 03.04.1992
(51) Int. Cl.: H01M 10/40, H01M 4/58, H01M 4/40

(54) **Secondary battery**
Sekundärbatterie
Batterie sécondaire

(30) Priority: 05.04.1991 JP 7194691; 25.12.1991 JP 34166991
(43) Date of publication of application: 14.10.1992
(73) Proprietor: SHARP KABUSHIKI KAISHA, Osaka-shi, Osaka-fu 545-0013 (JP)
(72) Inventor: Kitayama, Hiroyuki, Kitakatsuragi-gun, Nara-ken (JP); Tanaka, Hideaki, Nara-shi, Nara-ken (JP); Mitate, Takehito, Kitakatsuragi-gun, Nara-ken (JP); Yamada, Kazuo, Kitakatsuragi-gun, Nara-ken (JP)
(74) Representative: West, Alan Harry

(56) References cited:
- EP-A- 0 239 410
- EP-A- 0 404 578
- EP-A- 0 434 402
- CHEMICAL ABSTRACTS, vol. 110, no. 10, March 6, 1989, Columbus, Ohio, USA YOSHIO M. et al. "The importance of the donor and acceptor concept in tailoring nonaqueous mixed electrolytes for lithium secondary batteries" page 229, column 1, abstract-no. 79 271k & Prog. Batteries Sol. Cells 1988, 7, 377-379
- CHEMICAL ABSTRACTS, vol. 110, no. 20, May 15, 1989, Columbus, Ohio, USA TAKAHASHI YUZURU et al. "Secondary batteries with lithium-carbon anodes" page 216, column 1, abstract-no. 176 729y & JP-A-01 014 410

## Description

The present invention relates to a secondary battery and, more particularly, to a lithium secondary battery.

It is known that active carbon materials made from hydrocarbons and the like by vapor phase pyrolysis perform better than lithium as the anode in terms of charge and discharge characteristics in a lithium secondary battery. In a battery having the anode formed of the pyrolyzed carbon material, a solution of a lithium salt such as LiClO₄ in propylene carbonate (referred to as PC) is used as the electrolyte because it has a high dielectric constant and a wide working range of temperatures.

When the carbon material is used as the anode in a lithium secondary battery using a PC solvent, decomposition of PC occurs during charging or discharging. This decomposition can be prevented by employing a carbon deposition material which is obtained by vapor phase pyrolysis of hydrocarbons or hydrocarbon derivatives at approximately 1000°C (described in Japanese Patent Applications Laid Open Nos. 24555/1988 and 311565/1989). However, decomposition is not completely prevented and the battery characteristic is unlikely to be further improved.

In addition, when the battery is used at low temperatures of 0 to -20 °C, anode capacity is reduced, and then battery capacity is also reduced.

In addition, there have been proposed alternative organic solvents for lithium salts in lithium secondary batteries, as follows: acetonitrile, propionitrile, propylene carbonate, ethylene carbonate, tetrahydrofuran, dioxane, 1,2-dimethoxyethane, nitromethane, N,N-dimethylformamide, dimethyl sulfoxide, sulfolane and butylolactone. In Japanese Patent Application Laid Open No. 14881/1989, there is used a mixed solvent of propylene carbonate and 1,2-dimethoxyethane in the volume ratio of 1:1.

The present invention was developed in an attempt to solve the above problems, and provides a secondary battery having high capacity and superior low temperature characteristic and cycle characteristic by selecting an electrolyte suitable for a carbon deposition material obtained by vapor phase pyrolysis.

According to the invention, there is provided a secondary battery in which a carbon deposition material made by vapor phase pyrolysis of a hydrocarbon or a hydrocarbon derivatives is employed as an anode active material and a nonaqueous organic solvent in which a lithium salt is dissolved is employed as the electrolyte. The solvent is a mixture of a solvent having a high dielectric constant and a donor number less than 24 and selected from propylene carbonate, ethylene carbonate and γ-butyrolactone, and an ether solvent having a lower viscosity than the high dielectric solvent and a donor number less than 24.

The carbon deposition material has a skin-core structure and comprises a carbon material, in which the average lattice width of hexagonal graphite is from 0.3354 to 0.355nm and the peak ratio is from 0.4 to 1.0 at a wave number of 1360cm⁻¹ to 1580cm⁻¹ in an argon laser Raman spectrum. The carbon deposition material comprises a mixture of carbon materials in which the average lattice width of hexagonal graphite is from 0.3354 to 0.3400nm and the average lattice width is from 0.343 to 0.355nm. A preferred carbon deposition material employed in the secondary battery anode material includes a carbon material whose surface layer has an amorphous structure or a turbostratic structure, in which the lattice width of hexagonal graphite is from 0.337 to 0.355nm and the peak ratio is from 0.4 to 1.0 at a wave number of 1360cm⁻¹ to 1580cm⁻¹ in an argon laser Raman spectrum.

The carbon deposition material has a skin-core structure, in which the average lattice width of hexagonal graphite is from 0.3354 to 0.355nm and the peak ratio is from 0.4 to 1.0 at a wave number of 1360cm⁻¹ to 1580cm⁻¹ in an argon laser Raman spectrum.

The carbon deposition material is a mixture of a carbon material in which the lattice width of hexagonal graphite is from 0.3354 to 0.3400nm and a carbon material in which the lattice width of hexagonal graphite is from 0.343 to 0.355nm. In evaluating the mixing ratio, a (002) lattice of carbon graphite is measured using CuKα radiation. A diffraction value or the (002) lattice width is represented by a peak ratio of a diffraction value at 2Θ = 25.0° to a maximum diffraction value. In this case, it is preferable that this diffraction ratio is from 0.03 to 0.90, more preferably from 0.03 to 0.50.

In addition, the carbon deposition material preferably has a skin-core structure, in which the average lattice width of hexagonal graphite is from 0.337 to 0.355nm and the peak ratio is from 0.4 to 1.0 at a wave number of 1360cm⁻¹ to 1580cm⁻¹ in an argon laser Raman spectrum.

In addition, the turbostratic structure has the following characteristics in an X-ray diffraction pattern.
1. A (001) diffraction is broad and its position is shifted to a low angle as compared to pure carbon graphite. More specifically, the average lattice width is larger, tailing to the low angle side and showing an asymmetric profile.
2. An (hk) diffraction is rather broad, sharply rising on the low angle side, long tailing to the high angle side and showing an asymmetric profile.
3. An (hkl) diffraction is not recognizable.

The solvent having a high dielectric constant is selected from propylene carbonate, ethylene carbonate and γ-butyrolactone. The ether solvent having a viscosity lower than that of the high dielectric solvent is tetrahydrofuran (THF) or 2 methyltetrahydrofuran (2Me THF).

In addition, the volume ratio of the high dielectric solvent and the low viscosity solvent is preferably 1:4 to 4:1.

In addition, it is preferred that at least one Li salt such as LiClO₄, LiCF₃SO₃, LiBF₄, LiPF₆, LiCl+AlCl₃ or LiAsF₆ is dissolved in the solvent system in an amount of 0.5 to 2.0 mol/l. The concentration of Li salt such as LiClO₄ in the solvent system is preferably about 1mol/l.

However, the inventors have found that even if the carbon material has a similar layer structure, its intercalation characteristic and suitable nonaqueous organic solvents are different, depending on sight differences in the layer structures. Especially, when vapor-phase pyrolysis carbon is employed as the anode active material, a nonaqueous organic solvent having a donor number less than 24 is preferred.

In the secondary battery in which the carbon electrode is employed as the anode active material, Li having an ion radius 0.6Å can be smoothly intercalated into the carbon lattice (a lattice width is 3.354Å to 3.55Å) during charging and can be smoothly deintercalated from the carbon lattice during discharging. However, since a solvent molecule is solvated onto Li in the actual electrolyte, the ion radius is larger than 0.6Å for Li by solvent association. For example, the radius is 3.8Å when PC is solvated and it is 3.4Å or more when DME is solvated (for example, referring to J.Electrochem. Soc., 128, 2552 (1981)). Therefore, in a battery utilising intercalation into the carbon lattice, it is preferable to employ a solvent which weakly solvates the solute and which, because the solvent molecule easily dissociates from the surface of the carbon when the solute is intercalated into the carbon lattice, does not prevent intercalation of the solute. In order to measure the association strength of the solution, there is used a donor number system proposed by Gutmann. More specifically, the higher the donor number, the more the solution is likely to be associated (Coord. Chem. Rev., 2,239(1967)).

More specifically, by using a solvent of low donor number, the association strength is sufficiently low and the solute is not prevented from being intercalated into the vapor-phase pyrolysis carbon material, whereby charge and discharge efficiency are increased. In addition, in an electrolyte such as DMSO or DME having high donor numbers and which are likely to be associated with a solute, the solute is intercalated into the carbon lattice while the solvent molecule is associated (more specifically, an ion molecule larger than the carbon lattice width is intercalated), causing the carbon structure to be destroyed. As a result, the carbon material strips from the electrode and then battery capacity is reduced. However, this does not occur if the solvent has a donor number less than 24 and then the capacity is not reduced during the charge and discharge cycle.

In addition, in the case of one solvent, a high dielectric solvent is generally useful. Therefore, such a solvent as described above is superior to a low viscosity solvent such as ethers. However, an ether (a low viscosity solvent) is associated to Li⁺ more strongly than a high dielectric solvent such as propylene carbonate, ethylene carbonate and γ-butyrolactone and is superior to reduction resistance. Thus, by mixing both solvents to make electrolyte, decomposition of the high dielectric solvent can be prevented. In addition, viscosity is reduced in the mixed solvent, whereby a preferred electrode characteristic can be provided even at low temperatures.

In addition, any hydrocarbon or hydrocarbon derivatives which is conventionally used in the art can be used for the materials for forming the carbon deposition material.

EP-A-0478379 which was published after the priority date of the present application, describes lithium secondary batteries which also make use or mixed solvents for the lithium salt electrolyte. In that case, however, the active anode material may be coke, sintered synthetic resin, carbon fibre, thermally decomposable gaseous carbon, mesophase patch-like carbon or mesocarbon microbeads. Also, one solvent is selected from cyclic and non-cyclic carbonates, γ-butyrolactone and acetonitrile and the other solvent is selected from 1,2-diethoxyethane, 1,2-dimethoxyethane, 1,2-ethoxymethoxyethane, 1,3-dimethoxypropane, diethylether and tetrahydrofuran.

Similarly secondary batteries are described in EP-A-0239410. Also, Chemical Abstracts, volume 110, No. 10, March 1989, No. 79271k considers the relevance of donor number to the constitution of the mixed solvents.

In the experiments that follow, reference is made to the accompanying drawings. The experiments illustrate the solvent combinations used in the invention.
Fig. 1 is a graph showing the relation between the charge and discharge cycle and discharge capacity at 25°C of a battery.
Fig. 2 is a table showing the relation between a charge and discharge cycle and the charge and discharge efficiency at 25°C of the same battery.
Fig. 3 is a graph showing the first cycle charge and discharge characteristic at 25°C of the same battery.
Fig. 4 is a graph showing the relation between the charge and discharge cycle and discharge capacity at 0°C of another battery.
Fig. 5 is a graph showing the relation between the charge and discharge cycle and discharge capacity at 25°C of a further battery.
Fig. 6 is a graph showing the relation between the first cycle charge and discharge efficiency and the donor number at 25°C of various solvents;
Fig. 7 is a graph comparing the cycle characteristics of solvents having high dielectric constants and ether solvents having low viscosities; and
Fig. 8 is a schematic view of an apparatus for the pyrolysis of carbon for making the anode active material.

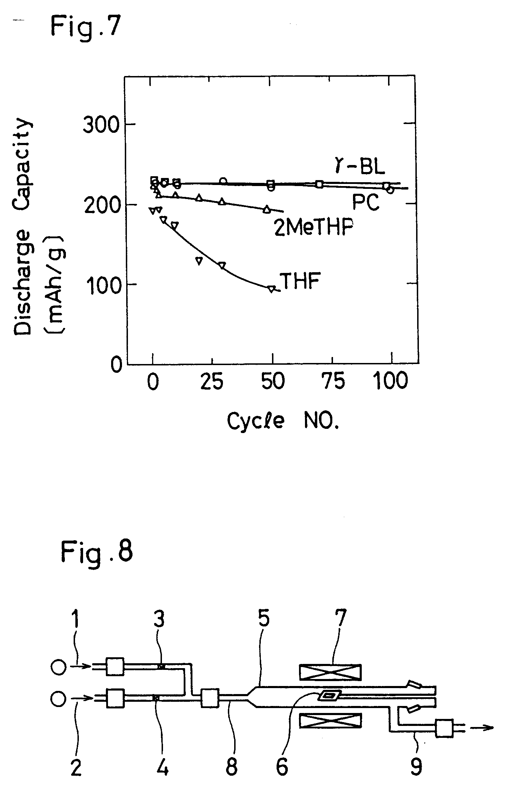

A carbon deposition material was provided by vapor phase pyrolysis using an apparatus shown in Fig. 8. Argon gas was supplied through a supply line 1 and propane was supplied through a supply line 2. The propane concentration of the gas was set to 0.13 mole % by needle valves 3 and 4. Flow velocity of the gas was set to 0.64 cm/min and the supply of propane was set to 0.03 mol/h. In a reaction tube 5 was a holder 6 on which a Ni substrate was placed and a heating furnace 7 was provided around the reaction tube 5. The holder 6 and the substrate were heated by the furnace 7 to approximately 1000°C for one hour, whereby propane supplied from a Pyrex tube 8 was pyrolytically decomposed and a pyrolysis carbon film was formed on the Ni substrate. In the resulting carbon material, the lattice width on the C-axis was 0.336nm from a diffraction maximum peak of the (002) reflection of graphite in X-ray diffraction using Cukα radiation, the peak ratio was approximately 0.8 at a wave number of 1360cm⁻¹ to 1580cm⁻¹ in an argon laser Raman spectrum and a crystallite size Lc in the C-axis direction was approximately 136A. The pyrolytic carbon deposited on the Ni substrate was used as an anode active material in combination with the following electrolytes to form a lithium seconddary battery.

Evaluation of the electrolyte appropriate to the anode of this battery was made by using a three-electrode cell in which the anode was a test electrode, Li was the cathode and Li/Li⁺ was a reference electrode, and also by using the nonaqueous organic solvents shown in the Tables 1 and 2 in which LiClO₄ was dissolved in amounts of about 1 mol/l.

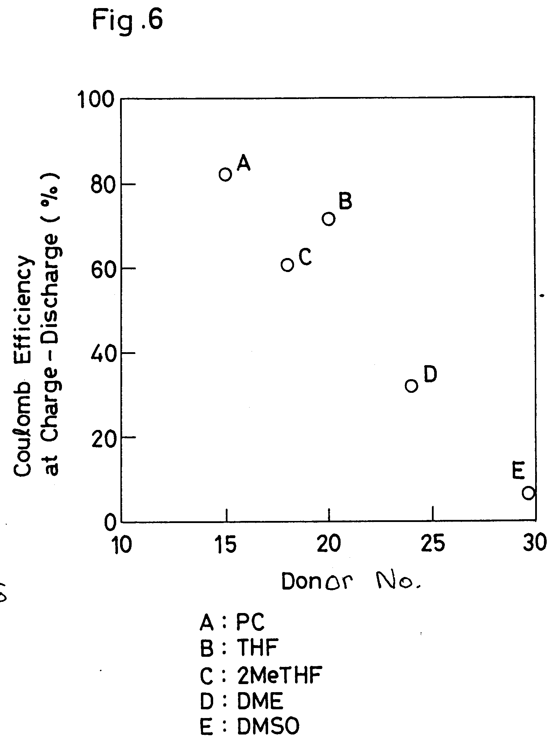

Charge and discharge coulomb efficiency (Fig. 6) and cycle characteristic of discharge capacity (Fig. 7) were determined by performing a charge and discharge cycle test between 0 and 2.5V relative to Li/Li⁺ at a constant current of 60mA per 1g of carbon using PC, THF, 2MeTHF, DME, DMSO, and γ-BL.

As can be seen from Fig. 6, while the charge and discharge coulomb efficiency are considerably less for DME and DMSO which are the nonaqueous organic solvents having donor numbers of less than 24 or more, they are improved for PC, THF and 2MeTHF which are nonaqueous organic solvents having donor numbers of less than 24. In addition, as can be seen from Fig. 7, the high dielectric solvents are superior to the low viscosity solvents such as ethers.

### Experiment 1

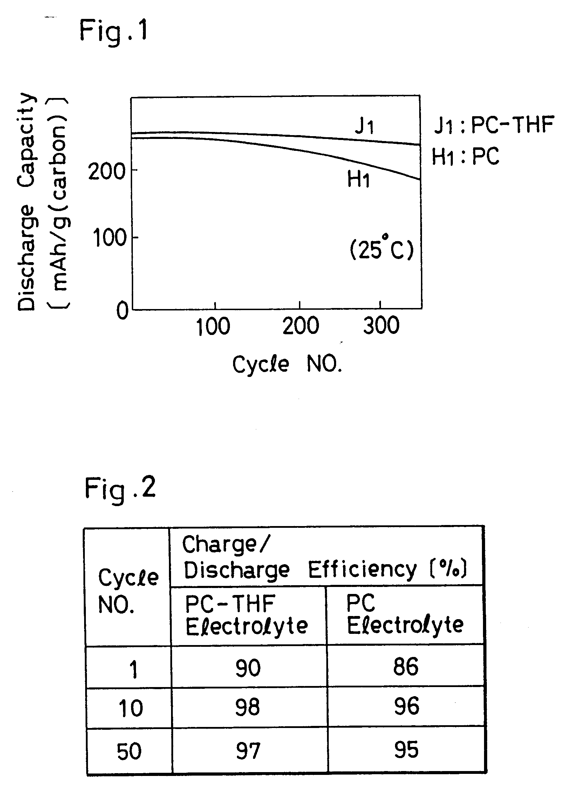

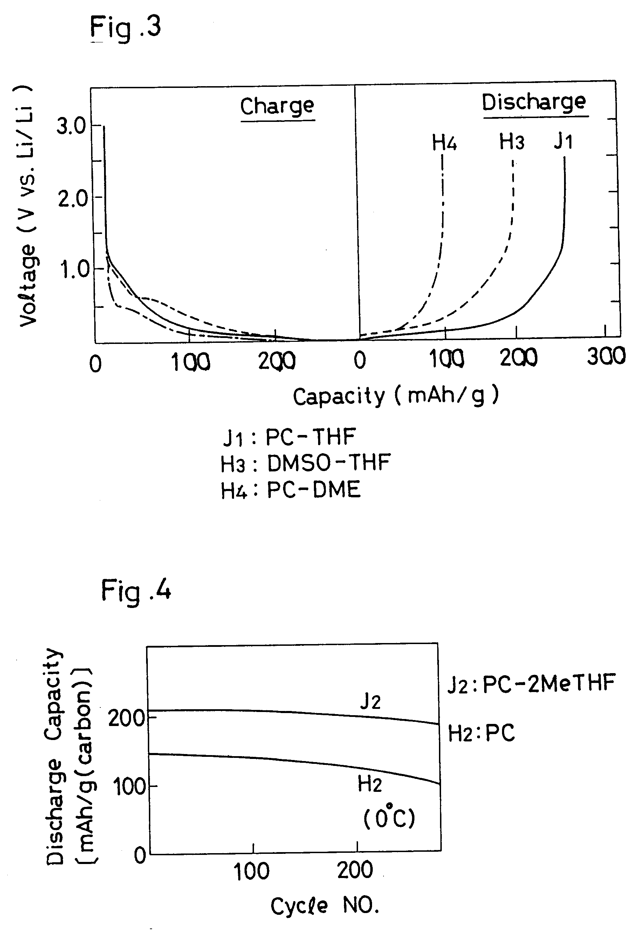

The charge and discharge cycle test was performed between 0 and 2.5V relative to Li/Li⁺ at 25°C at a constant current of 60mA per 1g of carbon using PC-THF mixed solvent (volume ratio 1:1). The discharge capacity at that time is shown by a curve J1 in Fig. 1, charge and discharge efficiency is shown in Fig. 2 and the charge and discharge characteristic is shown by curve J1 in Fig. 3.

In addition, for comparison, the same test was performed under the same conditions using PC (shown by a curve H1 in Fig. 1), DMSO-THF mixed solvent (volume ratio 1:1) (shown by a curve H3 in Fig. 3) and PC-DME mixed solvent (volume ratio 1:1) (shown by a curve H4 in Fig. 3).

As a result, it was found that both the efficiency and the cycle characteristic is improved by employing the mixed solvent. In addition, it was found that preferable efficiency and great discharge capacity characteristic can be obtained by using the mixed solvent containing the solvent having a high dielectric constant whose donor number is less than 24 and the ether solvent having a low coefficient of viscosity whose donor number is less than 24, and that if either solvent has a donor number of 24 or more, then the preferable characteristic is not obtained.

### Experiment 2

The charge and discharge cycle test was performed at a temperature 0°C under the same condition as that of Experiment 1 using PC-2Me THF mixed solvent (volume ratio 1:1). The discharge capacity at that time is shown by curve J2 in Fig. 4.

In addition, the same test was performed using PC (shown by curve H2 in Fig. 4) for comparison.

As a result, it was found that the capacity is increased at a low temperature by employing the mixed solvent.

### Experiments 3 AND 4

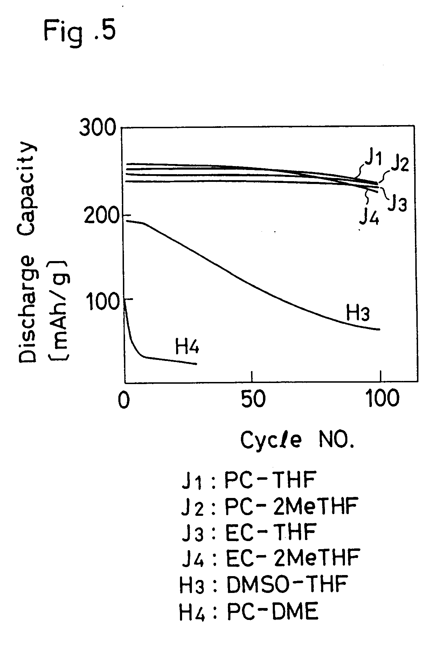

The charge and discharge test was performed between 0 and 2.5V relative to Li/Li⁺ at a constant current of 60mA per 1g of carbon using a mixed solvent of EC-THF (experiment 3) and EC-2MeTHF (experiment 4) (volume ratio 1:1). The discharge capacity at that time is shown by curves J3 and J4 in Fig. 5.

In addition, the result for DMSO-THF and PC-DME (shown by curves H3 and H4 in Fig. 4) and the experiment 1 (J1) and Experiment 2(J2) are shown together for comparison.

As a result, it was found that the preferable cycle characteristic can be obtained using the mixed solvent containing the high dielectric solvent whose donor number is less than 24 and the ether solvent of a low coefficient of viscosity whose donor number is less than 24, and that if either solvent has a donor number of 24 or more, then the cycle characteristic is lowered.

Although the above carbon material has a skin-core structure, with an average lattice width of hexagonal graphite of 0.3354 to 0.355nm and a peak ratio from 0.4 to 1.0 at a wave number of 1360cm⁻¹ to 1580cm⁻¹ in an argon laser Raman spectrum, the same effect can be expected using the carbon material which is covered with an amorphous or turbostratic structure, in which the average lattice width for hexagonal graphite is 0.337 to 0.355nm and the peak ratio is 0.4 to 1.0 at a wave number of 1360cm⁻¹ to 1580cm⁻¹ in an argon laser Raman spectrum. This carbon material has a skin-core structure, in which an active material or irregularities on the carbon surface is preferably in contact with the electrolyte. More preferably, the average lattice width in the crystal structure of the skin is 0.343 to 0.355nm. Further, its core is formed of carbon graphite having an average lattice width of 0.3354 to 0.3400nm.

As described above, there is provided a secondary battery of high capacity which is superior in charge and discharge efficiency, cycle characteristic and low temperature characteristic, using an electrolyte suitable for a vapor-phase pyrolysis carbon materials.

## Claims

1. A secondary battery comprising
as an anode active material a carbon deposition material formed by vapor phase pyrolysis of a hydrocarbon or a hydrocarbon derivative and which comprises a carbon material having an average (002) lattice width of hexagonal graphite at the C axis from 0.3354 to 0.355 nm (measured using CuKα radiation) and a peak ratio from 0.4 to 1.0 at a wave number of 1360cm⁻¹ to 1580cm⁻¹ in an argon laser Raman spectrum, and wherein the carbon deposition material comprises a mixture of a carbon material having an average lattice width of hexagonal graphite from 0.3354 to 0.3400 nm, and a carbon material having an average lattice width from 0.343 to 0.355 nm, and
as an electrolyte a lithium salt in solution in an nonaqueous organic solvent, the nonaqueous organic solvent being a mixture of a high dielectric solvent having a donor number less than 24 selected from propylene carbonate, ethylene carbonate and γ-butyrolactone and an ether solvent having a viscosity less than that of the high dielectric solvent and a donor number less than 24 selected from tetrahydrofuran and 2-methyltetrahydrofuran.

2. A secondary battery according to claim 1, wherein the carbon deposition material comprises a carbon material covered with an amorphous structure or having a turbostratic surface structure.

3. A secondary battery according to claim 2 wherein the carbon deposition material has a turbostratic surface structure, in which the lattice width of hexagonal graphite is from 0.337 to 0.355 nm and the peak ratio is from 0.4 to 1.0 at a wave number of 1360cm⁻¹ to 1580cm⁻¹ in an argon laser Raman spectrum.

4. A secondary battery according to any one of claims 1 to 3, which is a lithium secondary battery.

## Patentansprüche

1. Sekundärbatterie, enthaltend:
als aktives Anodenmaterial ein Kohlenstoffablagerungsmaterial, gebildet durch Dampphasenpyrolyse eines Kohlenwasserstoff oder eines Kohlenwasserstoffderivats und das ein Kohlenstoffmaterial enthält, mit einer durchschnittlichen (002) Gitterbreite eines hexagonalen Graphits bei der C Achse zwischen 0,3354 bis 0,355 nm (gemessen unter Einsatz von CuKα Strahlung) und einem Spitzenverhältnis von 0,4 bis 1,0 bei einer Wellenzahl von 1360 cm⁻¹ bis 1580 cm⁻¹ in einem Argonlaser-Raman-Spektrum, und derart, daß das Kohlenstoffablagerungsmaterial eine Mischung eines Kohlenstoffmaterials mit einer durchschnittlichen Gitterbreite des hexagonalen Graphits von 0,3354 bis 0,3400 nm und eines Kohlenstoffmaterials mit einer durchschnittlichen Gitterbreite zwischen 0,343 bis 0,355 nm enthält, und
als einen Elektrolyten ein Lithiumsalz in Lösung in einem nicht-wässrigen organischen Lösungsmittel derart, daß das nicht-wässrige organische Lösungsmittel eine Mischung ist, und zwar eines Lösungsmittels hoher Dielektrizität mit einer Donatorzahl weniger als 24, ausgewählt aus Propylencarbonat, Ethylencarbonat und γ-Butyrolaceton, sowie einem Etherlösungsmittel mit einer Viskosität niedriger als derjenigen des Lösungsmittels hoher Dielektrizität und einer Donatorzahl weniger als 24, ausgewählt aus Tetrahydrofuran und 2-Methyltetrahydrofuran.

2. Sekundärbatterie nach Anspruch 1, dadurch gekennzeichnet, daß das Kohlenstoffablagerungsmaterial ein Kohlenstoffmaterial enthält, das mit einer amorphen Struktur bedeckt ist oder das eine turbostratische Oberflächenstruktur aufweist.

3. Sekundärbatterie nach Anspruch 2, dadurch gekennzeichnet, daß das Kohlenstoffablagerungsmaterial eine turbostratische Oberflächenstruktur aufweist, bei der die Gitterbreite des hexagonalen Graphits in den Bereich von 0,337 bis 0,355 nm liegt, und das Spitzenwertverhältnis in dem Bereich ausgehend von 0,4 bis 1,0 liegt, bei einer Wellenzahl von 1360 cm⁻¹ bis 1580 cm⁻¹ in einem Argonlaser-Raman-Spektrum.

4. Sekundärbatterie nach einem der Ansprüche 1 bis 3, dadurch gekennzeichnet, daß sie eine Lithium-Sekundärbatterie ist.

## Revendications

1. Pile secondaire comprenant
en tant que matériau actif d'anode, un matériau à dépôt de carbone formé par pyrolyse en phase vapeur d'un hydrocarbure ou d'un dérivé d'hydrocarbure, et qui comprend un matériau au carbone ayant une largeur moyenne de réseau (002) de graphite hexagonal au niveau de l'axe C comprise entre 0,3354 et 0,355 nm (mesurée en utilisant un rayonnement CuKα) et un rapport de pic compris entre 0,4 et 1,0 à un nombre d'onde de 1360 cm⁻¹ à 1580 cm⁻¹ dans un spectre de Raman de laser à l'argon, et dans laquelle le matériau à dépôt de carbone comprend un mélange de matériau au carbone ayant une largeur moyenne de réseau de graphite hexagonal comprise entre 0,3354 et 0,3400 nm, et de matériau au carbone ayant une largeur moyenne de réseau comprise entre 0,343 et 0,355 nm, et
en tant qu'électrolyte, un sel de lithium en solution dans un solvant organique non aqueux, le solvant organique non aqueux étant un mélange d'un solvant à constante diélectrique élevée ayant un nombre de donneurs inférieur à 24, sélectionné à partir du carbonate de propylène, du carbonate d'éthylène et du γ-butyrolactone et d'un solvant éther ayant une viscosité inférieure à celle du solvant à constante diélectrique élevée et un nombre de donneurs inférieur à 24, sélectionné à partir du tétrahydrofurane et du 2 - méthyltétrahydrofurane.

2. Pile secondaire selon la revendication 1, dans laquelle le matériau à dépôt de carbone comprend un matériau au carbone recouvert d'une structure amorphe ou ayant une structure de surface turbostratique.

3. Pile secondaire selon la revendication 2, dans laquelle le matériau à dépôt de carbone a une structure de surface turbostratique, dans laquelle la largeur de réseau du graphite hexagonal est comprise entre 0,337 et 0,355 nm et le rapport de pic est compris entre 0,4 et 1,0 à un nombre d'onde de 1360 cm⁻¹ à 1580 cm⁻¹ dans un spectre de Raman de laser à l'argon.

4. Pile secondaire selon l'une quelconque des revendications 1 à 3, qui est une pile secondaire au lithium.
